# EUROPEAN PATENT SPECIFICATION

(11) **EP 4 477 483 B1**
(45) Date of publication and mention of the grant of the patent: **03.09.2025**
(21) Application number: 24181463.1
(22) Date of filing: 11.06.2024
(51) Int. Cl.: B60T 13/74

(54) **ACTUATOR WITH POSITION SENSOR**
STELLANTRIEB MIT POSITIONSSENSOR
ACTIONNEUR AVEC CAPTEUR DE POSITION

(30) Priority: 16.06.2023 IT 202300012471
(43) Date of publication of application: 18.12.2024
(73) Proprietor: Marelli Europe S.p.A., 20011 Corbetta (MI) (IT)
(72) Inventor: VERDELLI, Stefano, I-20011 Corbetta, MILANO (IT); PICIOTTI, Roberto, I-20011 Corbetta, MILANO (IT); MUSOLESI, Stefano, I-20011 Corbetta, MILANO (IT); STANZANI, Giovanni, I-20011 Corbetta, MILANO (IT); MARZULLO, Maurizio, I-20011 Corbetta, MILANO (IT)
(74) Representative: Mitola, Marco

(56) References cited:
- US-A1- 2005 250 382
- US-A1- 2018 154 881
- US-A1- 2020 040 994
- US-B2- 7 448 475

## Description

### FIELD OF APPLICATION

The present invention relates to an actuator, such as a linear actuator, provided with a position sensor, in particular for applications on parking brake modules in motor vehicles.

### BACKGROUND ART

In general, parking brake modules for motor vehicles comprise at least one actuator, typically of the linear type and equipped with a rod, with related kinematic mechanism, capable of placing the gearbox in the 'parking' position and then unlocking it.

The parking configuration must comply with the safety requirements of the vehicle, in particular, it must comply with the on-board diagnostics (OBD) of the vehicle; in other words, the electronics of the vehicle must always be capable of detecting possible malfunctions of the parking function.

The solutions of the prior art involve indirect measurement or estimation of the parking module configuration; in other words, the known solutions involve the use of sensors on the operating kinematic mechanism of the linear actuator, e.g., on a toothed wheel or pinion of such a kinematic mechanism. The on-board electronics can thus only estimate the position of the actuator and detect a possible anomaly by checking the angular position of the kinematic mechanism.

However, this type of indirect check is not entirely reliable and could, in some situations, lead to incorrect or untimely reports of possible malfunctions, for example if the failure occurs downstream of the kinematic mechanism monitored by the sensor.

Moreover, the solutions of the prior art are often mechanically complex and thus result in relatively high production costs.

In brief, the solutions of the prior art are expensive and not always reliable since they do not comply with the on-board diagnostics of the vehicle (OBD-compliant). Solutions according to the preamble of claim 1 are disclosed by US 2018/1544881 A1.

### INVENTION OVERVIEW

The need is therefore felt to solve the drawbacks and limitations mentioned above with reference to the prior art.

Such a need is met by an actuator according to claim 1.

### DESCRIPTION OF THE DRAWINGS

Further features and advantages of the present invention will be more comprehensible from the following description of preferred embodiments thereof, given by way of non-limiting examples, in which:
figure 1 depicts a perspective view, in assembled configuration, of an actuator according to an embodiment of the present invention;
figure 2 depicts a perspective view, in an exploded configuration, of the actuator in figure 1;
figure 3 depicts a section view, in assembled configuration, of the actuator in figure 1;
figure 4 depicts a perspective view of the antenna and the position sensor of the actuator in figure 1;
figure 5 depicts a side view of the antenna and the position sensor in figure 4, from the side of the arrow V in figure 4;
figures 6, 7, 8, 9 depict side or plan views of an actuator with related sensor in different operating positions;
figure 10 depicts a perspective view of the antenna and the position sensor of an actuator according to a further embodiment of the present invention;
figure 11 depicts a side, partial section view of the antenna and the position sensor in figure 10;
figure 12 depicts a side view of the antenna in figure 11, from the side of arrow XII in figure 11;
figure 13 depicts a perspective view of the antenna and the position sensor of an actuator according to a further embodiment of the present invention;
figure 14 depicts a side, partial section view of the antenna and the position sensor in figure 13;
figure 15 depicts a side view of the antenna in figure 14, from the side of arrow XV indicated in figure 14.

Elements or parts of elements common to the embodiments described below will be indicated by the same reference numerals.

### DETAILED DESCRIPTION

With reference to the aforementioned figures, reference numeral 4 indicates, as a whole, an actuator for applications on parking brake module on vehicles, according to the present invention.

The actuator 4 comprises a body 8 containing at least partially a control rod 12 operatively connected to motor means 16 and to an actuating device 20 of a parking brake (not shown).

Preferably, but not exclusively, the actuating device 20 is operatively connected to a parking brake of a motor vehicle. However, the aforesaid application is indicative and not exhaustive for the purposes of the present invention.

The body 8 delimits a containment volume 22 closed by a lid 26. For the purposes of the present invention, the body 8 and the lid 26 can have any shape and size; moreover, they can be made of several materials, including metal and plastic materials and combinations thereof.

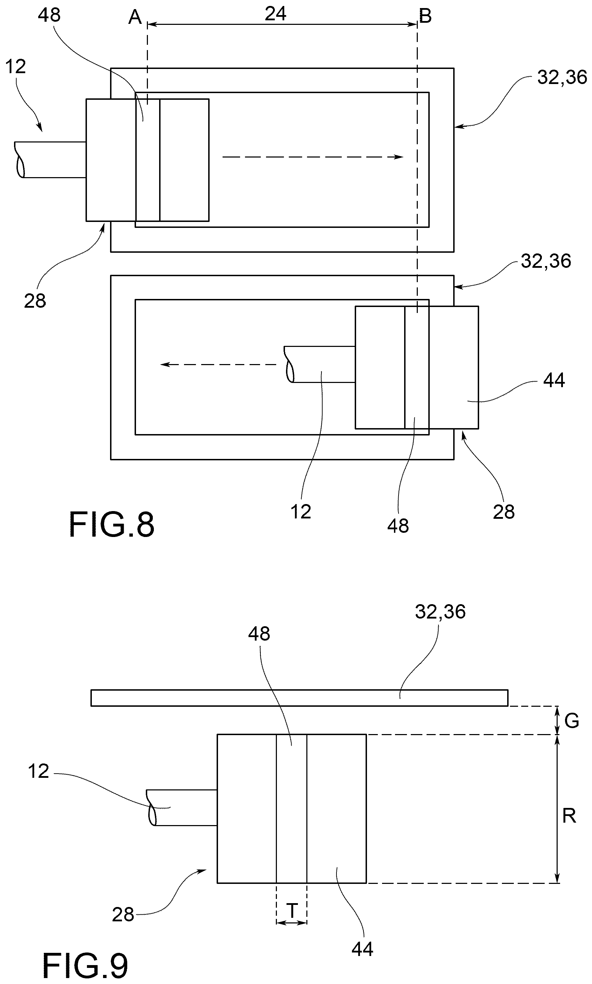

Said motor means 16 are configured to move the control rod 12 along an operating stroke 24 at least from a first position A to a second position B (Figure 8). The motor means 16 are preferably electric motors, e.g., DC electric motors.

It is worth noting that, for the purposes of the present invention, the operating stroke 24 is not necessarily linear, but can also be curvilinear, can include a broken line, or even an alternation of curvilinear and straight segments.

For example, the control rod 12 is operatively connected to the motor means 16 by means of kinematic mechanisms which can comprise screw-nut screw type couplings, gears, idlers, and so on.

Typically, said control rod 12 is provided with translational or roto-translational movement, the latter obtainable by means of a screw-nut screw type connection, for example.

The actuator 4 comprises an antenna 28 directly and integrally associated with the control rod 12, said antenna being arranged inside the body 8, i.e., inside the containing volume 22. The antenna 28 can thus provide information on the position, i.e., on the operating condition, directly of the control rod 12, not of a component of the kinematic mechanism or the motor means 16 themselves configured to move the control rod 12. In other words, it is possible to obtain a direct feedback on the position and thus on the operating condition of the control rod 12 which interfaces with the actuating device 20: this feedback unequivocally provides the operating condition of the actuating device 20 located downstream of the actuation chain which starts from the motor means 16.

Therefore, it is possible to obtain an absolutely reliable feedback on the operating condition of the actuating device 20 but not of an intermediate kinematic mechanism as in the solutions of the prior art. Therefore, it is apparent that the feedback obtainable from this configuration is essential for the operation diagnostics of the apparatus arranged downstream of the actuating device 20.

The actuator 4 further comprises a position sensor 32 arranged, for example, on a printed circuit or PCB holder 36, housed inside the body 8, i.e., in said containment compartment 22, and facing the control rod 12 and the antenna 28. The position sensor 32 is of the active type and is powered by power supply means (not shown), typically DC power supply means.

The position sensor 32 is configured to detect the presence and position of said antenna 28, which, as seen, is associated directly and integrally with the control rod 12.

According to a possible embodiment, the sensor position 32 is arranged on the PCB support 36, e.g., parallel to said control rod 12.

Said position sensor 32 is sized and positioned so as to cover and detect the position of the antenna 28 along said operating stroke 24, as shown in figure 8, for example, showing the antenna 28 in the first stroke-end position A and in the second stroke-end position B, respectively.

Preferably, the antenna 28 is arranged inside the body 8, i.e., inside the containment volume 22, between the motor means 16 and the position sensor 32. The antenna 28 can thus always and immediately detect not only the position but also the very presence of the antenna 28 associated with the respective control rod 12.

Therefore, the system is entirely reliable and is capable of immediately detecting any anomaly downstream of the kinematic mechanism, hence any anomaly which directly affects the actuating device 20 the operation and/or operating condition of which must be monitored.

Anomaly means both the detachment of the antenna 28 from the respective control rod 12, which event would be immediately detected by position sensor 32 which would no longer sense the presence of the antenna 28 itself, and an abnormal position of the antenna and hence an unsuitable operating configuration of the actuating device 20.

Preferably, the antenna 28 is fixed to an inner end 52 of the control rod 12, contained inside the body 8, i.e., in the containment volume 22, said inner end 52 being opposite to and integral with an outer end 56 which interfaces with said actuating device 20.

According to a possible embodiment, the antenna 28 is fixed on the control rod 12 by interference (press-fitting) and/or by gluing.

Preferably, the antenna 28 is keyed onto a portion of the control rod 12 provided with an external thread 60; the thread thus allows adjusting the axial position of the antenna 28 with respect to the control rod 12 by simply screwing the antenna 28 onto the threaded portion.

The external thread 60 also forms an axial undercut, i.e., it fixes the axial position of the antenna 28 with respect to the control rod 12. For this purpose, it is also possible to use special stops adapted to prevent a relative axial translation between the antenna 28 and the control rod, which would lead to an incorrect reading of the position or operating condition of the actuating device 20 by the position sensor 28.

As mentioned above, the control rod 12 can have any geometric shape and any relative actuation movement.

Preferably, but not exclusively, the control rod 12 has a main extension axis X-X and is movable along an axial direction parallel to said main extension axis X-X.

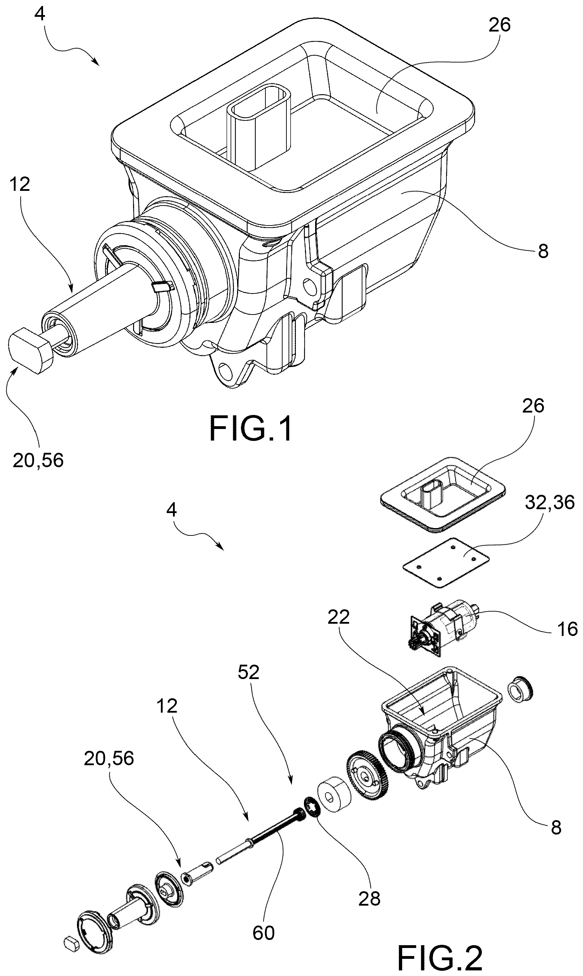

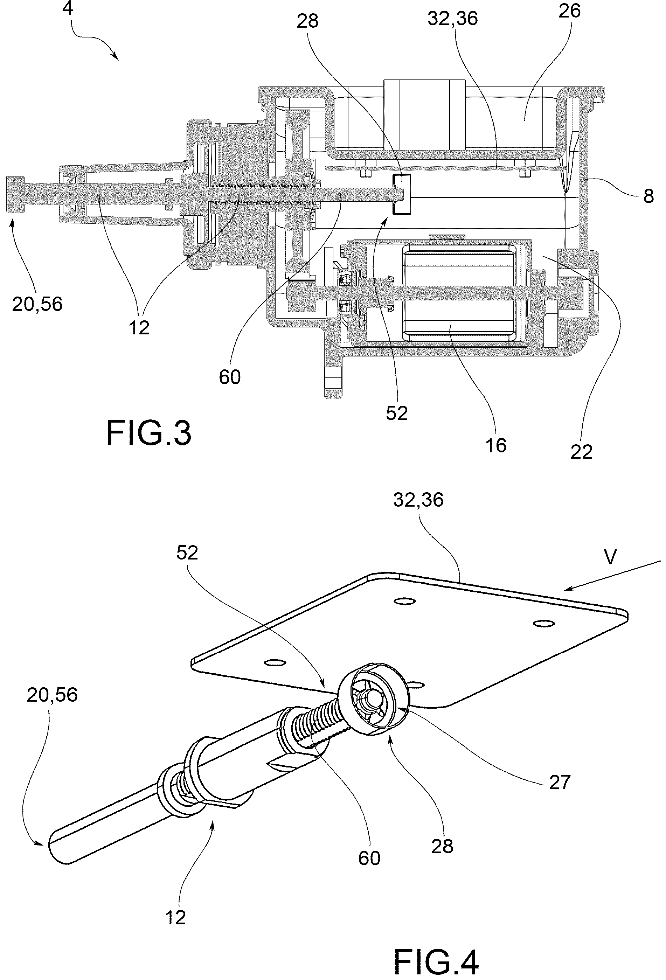

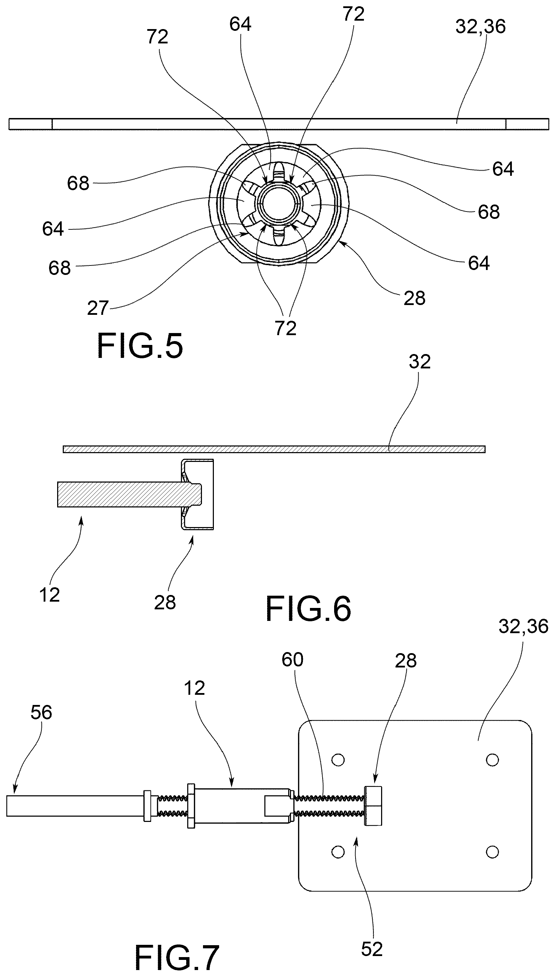

According to a possible embodiment (figures 1-9), said antenna 28 is axisymmetric with respect to said main extension axis X-X.

According to the invention, the antenna 28 is arranged coaxially to the control rod 12. Coaxial arrangement means that at least one portion 27 for fixing the antenna 28 to the control rod 12 is coaxial with the control rod 12 itself.

Preferably, said antenna 28 is a ring, at least partially made of metal and coaxial with the control rod 12. Preferably, the antenna 28 is a single ring, made in one piece, coaxially keyed onto the control rod 12.

Preferably, said antenna 28 is a Grifax^{®} ring directly associated with the control rod 12.

Said ring, for example of the Grifax^{®} type, preferably comprises a plurality of radial teeth 64 mutually separated by grooves 68, preferably provided with end edges 72 in the shape of an arc of a circle; the radial teeth 64 thus interface with and are screwed onto the external thread 60 of the control rod 12.

As seen, the ring can be axisymmetric with respect to the main extension axis X-X of the control rod 12 (figures 1-9). In such an axisymmetric configuration, the angular orientation of the ring is irrelevant.

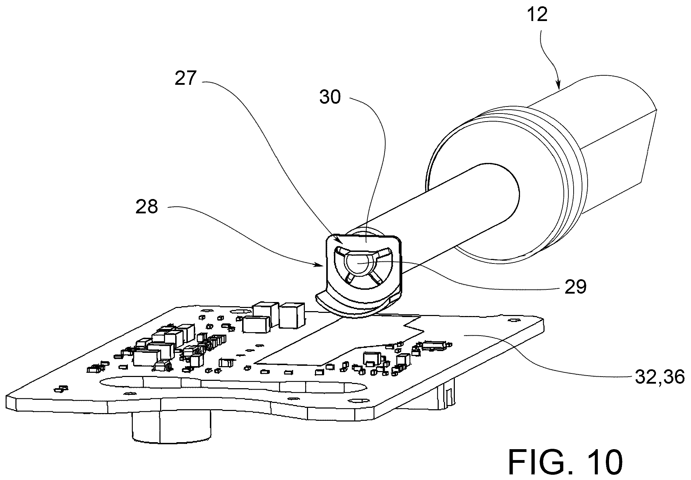

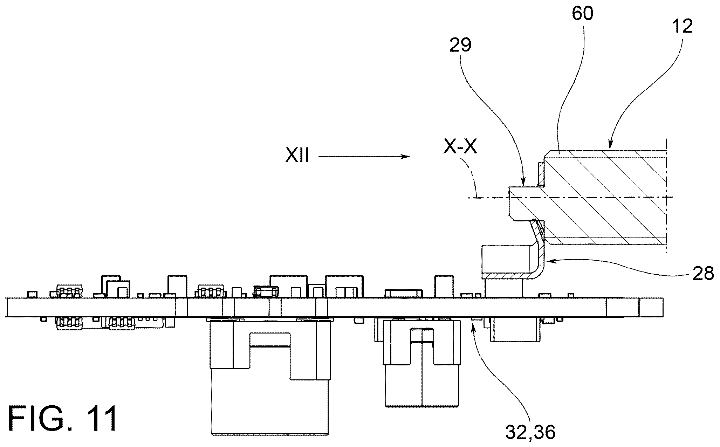

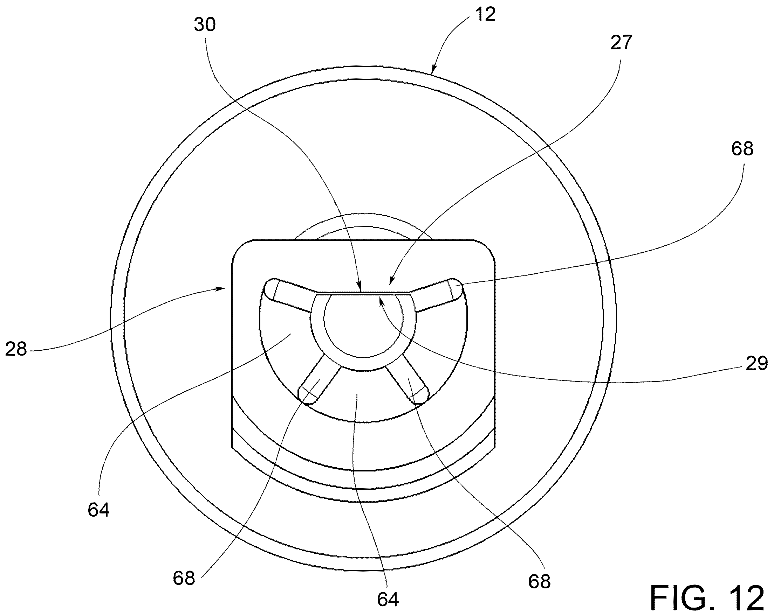

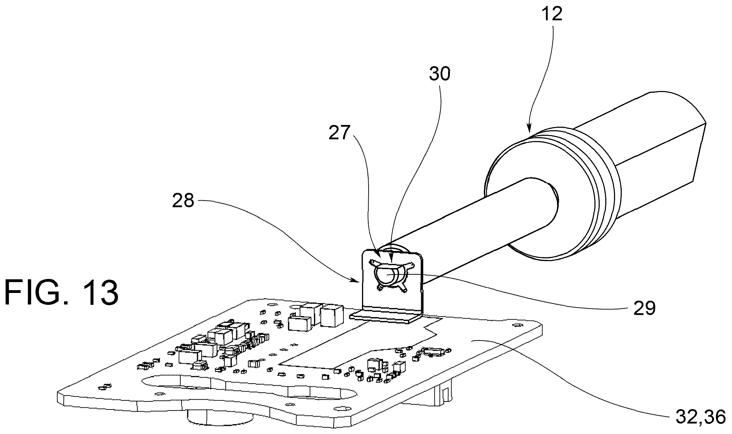

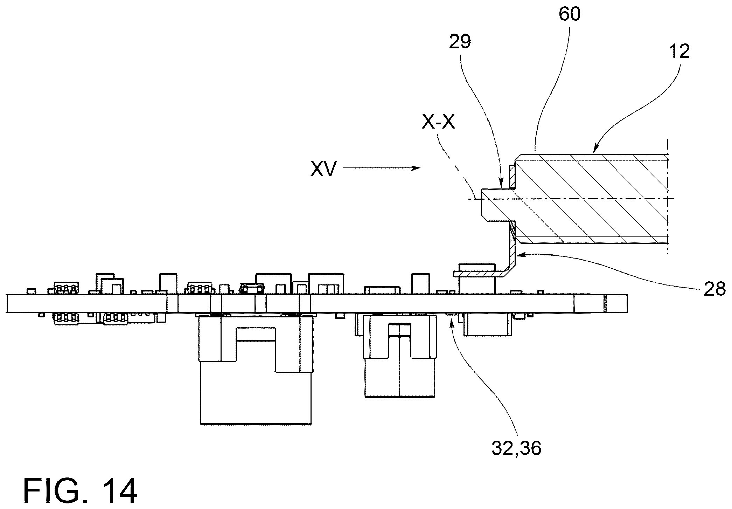

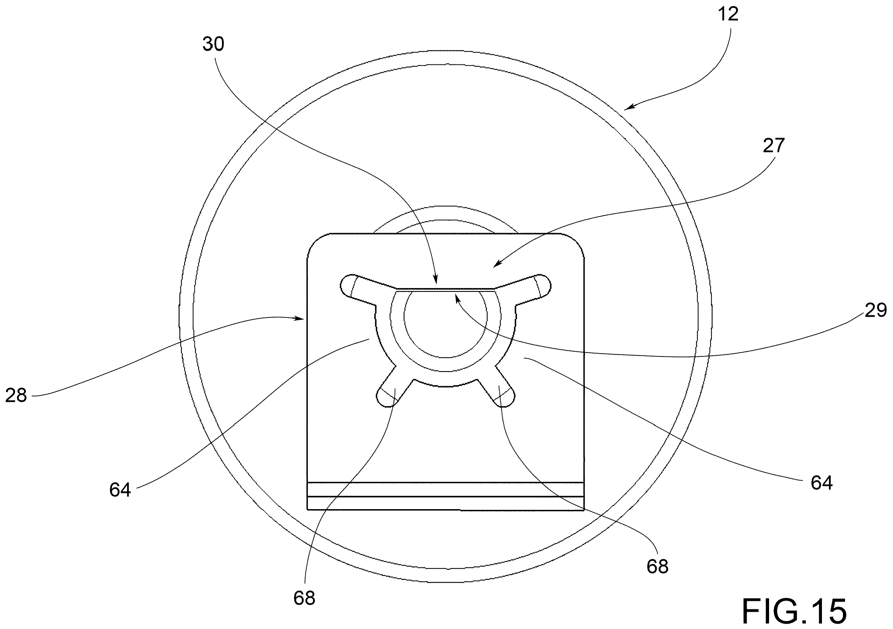

It is also possible to provide an asymmetric ring, as shown in figures 10-15, for example, as the antenna 28. In such embodiments, there is a precise angular orientation of the asymmetric ring with respect to the control rod 12. Such an orientation is obtained, for example, by shape coupling between the control rod and the fixing portion 27 of the ring. For example, such a shape coupling comprises a flattening 29, made on the control rod 12, which couples to a flat abutment 30 obtained on the ring.

According to a possible embodiment, said antenna 28 comprises a cylindrical support 44 to which a metal portion 48 is folded and applied, e.g., by gluing, in the form of a metal foil. Said metal foil 48 can also be applied as a metal coating, obtainable in various manners, including by PVD and/or CVD. In general, the metal portion can have any shape and thickness and can be applied to the control rod by bonding, interlocking, undercutting, welding, CVD, PVD, and the like.

In general, said antenna 28 preferably has a cylindrical shape about said main extension axis X-X, with a radius R greater than a distance or gap G from the position sensor 32.

The cylindrical shape is particularly useful when the operating stroke 24 of the control rod 12 and thus of the antenna 28 connected thereto is of the roto-translational type. Indeed, by virtue of the axial symmetry of the antenna 28, the risk that the position sensor 32 can take unreliable readings based on the actual angle of rotation of the antenna 28 during the operating stroke 24 is thus averted.

Preferably, the antenna 28 has an axial thickness T, parallel to the main extension axis X-X, greater than or equal to the gap G from the position sensor 32. Such a sizing always ensures the correct detection of the antenna 28 by the position sensor 32.

As can be appreciated from the description above, the present invention allows overcoming the drawbacks presented in the prior art.

In particular, the linear actuator according to the present invention is particularly reliable since it directly measures the position of the end component which interfaces with the parking mechanism.

Therefore, there is no indirect estimation of the actuator configuration, as in the solutions of the prior art, but rather a direct measurement of the position of the final component of the kinematic mechanism which engages or disengages the parking function.

Moreover, any detachment of the antenna from the related control rod is immediately detected by the position sensor located adjacent to the antenna.

The actuator is also particularly simple and inexpensive to manufacture and assemble.

Indeed, the antenna can be made using a very simple metal 'Grifax' ring, which is cost-effective and readily available in the market.

The assembly step is also particularly easy and cost-effective, because the 'Grifax' ring, or cylindrical antenna in general, can be immediately keyed onto the control rod. The antenna is thus self-supporting because, by virtue of the geometric shape thereof, is automatically supported by the control rod; indeed, being fitted coaxially to the control rod, it forms a radial undercut with respect to the rod itself, which prevents it from detaching. In the case of breakage or detachment, as mentioned above, the antenna separates from the control rod, and its movement away from the control rod is immediately detected by the position sensor.

Therefore, the solution according to the present invention is perfectly 'OBD-compliant', unlike the solutions of the prior art.

Moreover, the use of a ring fitted and screwed directly onto the control rod also allows varying the axial position of the antenna with respect to the control rod and thus with respect to a different position of the position sensor. In other words, it is possible to vary the stroke-end positions by simply changing the axial position of the antenna with respect to the control rod, without requiring an ad hoc component to be manufactured.

The scope of protection of the invention is defined by the following claims.

### List of reference signs

- 4:: actuator
- 8:: body
- 12:: control rod
- 16:: motor means
- 20:: actuating device
- 22:: containment volume
- 24:: operating stroke
- 26:: lid
- 27:: fixing position
- 28:: antenna
- 29:: flattening
- 30:: flat abutment
- 32:: position sensor
- 36:: printed circuit or PCB holder
- 44:: cylindrical support
- 48:: metal portion
- 52:: inner end
- 56:: outer end
- 60:: external thread
- 64:: radial teeth
- 68:: grooves
- 72:: end edges
- A:: first position
- B:: second position
- A:: radius
- G:: gap
- T:: axial thickness
- X-X:: main extension axis

## Claims

1. An actuator (4) comprising:
- a body (8) at least partially containing a control rod (12) operatively connected to motor means (16) and to an actuating device (20) of a parking brake, said motor means (16) being configured to move the control rod (12) along an operating stroke (24) at least from a first position (A) to a second position (B),
- an antenna (28) directly and integrally associated with the control rod (12), said antenna (28) being arranged inside the body (8),
- a position sensor (32) arranged on a printed circuit (36), housed inside the body (8) and facing the control rod (12) and the antenna (28), the position sensor (32) being configured to detect the presence and position of said antenna (28),
**characterized in that** said antenna (28) is arranged coaxially to the control rod (12).

2. An actuator (4) according to claim 1, wherein said control rod (12) has a main extension axis (X-X) and is movable along an axial direction parallel to said main extension axis (X-X).

3. An actuator (4) according to claim 2, wherein said antenna (28) is axisymmetric with respect to said main extension axis (X-X).

4. An actuator (4) according to any one of claims 1 to 3, wherein said antenna (28) is a ring at least partially made of metal and coaxial with said control rod (12).

5. An actuator (4) according to any one of claims 1 to 4, wherein said antenna (28) is fixed to the control rod (12) by interference (press-fitting) and/or by gluing.

6. An actuator (4) according to any one of claims 1 to 6, wherein the antenna (28) is keyed and screwed onto a portion of the control rod (12) provided with external thread (60).

7. An actuator (4) according to any one of claims 1 to 6, wherein said antenna (28) is a ring comprising a plurality of radial teeth (64) mutually separated by grooves (68), provided with end edges (72) in the shape of an arc of a circle so as to be screwed onto the external thread (60) of the control rod (12).

8. An actuator (4) according to claim 7, wherein said ring is axisymmetric with respect to said main extension axis (X-X) of the control rod (12).

9. An actuator (4) according to claim 7, wherein said ring is axisymmetric and a specific angular orientation is provided between the ring and the control rod (12), obtained by shape coupling between a flattening (29), made on the control rod (12), which couples to a flat abutment (30) obtained on the ring.

10. An actuator (4) according to any one of claims 1 to 9, wherein said antenna (28) comprises a cylindrical support (44) onto which a metal portion (48) is applied.

11. An actuator (4) according to claim 10, wherein said metal portion comprises a metal foil (48) and/or metal coating applied by metal coating, bonding, interlocking, undercutting, welding, CVD, PVD and the like.

12. An actuator (4) according to any one of claims 1 to 11, wherein the position sensor (32) is arranged on a printed circuit (36) parallel to said control rod (12).

13. An actuator (4) according to any one of claims 1 to 12, wherein said antenna (28) has a cylindrical shape about said main extension axis (X-X), with a radius (R) greater than a distance or gap (G) from the position sensor (32).

14. An actuator (4) according to any one of claims 1 to 13, wherein said position sensor (32) is sized and positioned so as to cover and detect the position of the antenna (28) along said operating stroke (24).

15. An actuator (4) according to any one of claims 1 to 14, wherein the antenna (28) is arranged inside the body (8) between the motor means (16) and the position sensor (32) and wherein the antenna (28) is fixed to an inner end (52) of the control rod (12), contained inside the body (8), said inner end (52) being opposite to and integral with an outer end (56) which interfaces with said actuating device (20).

## Patentansprüche

1. Stellglied (4), umfassend:
- ein Gehäuse (8), das zumindest teilweise eine Steuerstange (12) enthält, die in Wirkverbindung mit einem Motormittel (16) und einer Betätigungsvorrichtung (20) einer Feststellbremse steht, wobei das Motormittel (16) konfiguriert ist, um die Steuerstange (12) entlang eines Betätigungshubs (24) zumindest von einer ersten Position (A) in eine zweite Position (B) zu bewegen,
- eine Antenne (28), die direkt und integral mit der Steuerstange (12) verbunden ist, wobei die Antenne (28) innerhalb des Gehäuses (8) angeordnet ist,
- einen Positionssensor (32), der auf einer gedruckten Schaltung (36) angeordnet ist, im Inneren des Gehäuses (8) untergebracht ist und der Steuerstange (12) und der Antenne (28) gegenüberliegt, wobei der Positionssensor (32) konfiguriert ist, das Vorhandensein und die Position der Antenne (28) zu erfassen,
**dadurch gekennzeichnet, dass** die Antenne (28) koaxial zur Steuerstange (12) angeordnet ist.

2. Stellglied (4) nach Anspruch 1, wobei die Steuerstange (12) eine Haupterstreckungsachse (X-X) aufweist und entlang einer axialen Richtung parallel zu der Haupterstreckungsachse (X-X) beweglich ist.

3. Stellglied (4) nach Anspruch 2, wobei die Antenne (28) in Bezug auf die Haupterstreckungsachse (X-X) achsensymmetrisch ist.

4. Stellglied (4) nach einem der Ansprüche 1 bis 3, wobei die Antenne (28) ein Ring ist, der zumindest teilweise aus Metall besteht und koaxial zur Steuerstange (12) ist.

5. Stellglied (4) nach einem der Ansprüche 1 bis 4, wobei die Antenne (28) durch Presspassung und/oder durch Kleben an der Steuerstange (12) befestigt ist.

6. Stellglied (4) nach einem der Ansprüche 1 bis 6, wobei die Antenne (28) mit einem Abschnitt der Steuerstange (12), der mit einem Außengewinde (60) versehen ist, verzahnt und auf diesen aufgeschraubt ist.

7. Stellglied (4) nach einem der Ansprüche 1 bis 6, wobei die Antenne (28) ein Ring ist, der eine Vielzahl radialer Zähne (64) umfasst, die durch Nuten (68) voneinander getrennt sind und mit kreisbogenförmigen Endkanten (72) versehen sind, um auf das Außengewinde (60) der Steuerstange (12) geschraubt zu werden.

8. Stellglied (4) nach Anspruch 7, wobei der Ring in Bezug auf die Haupterstreckungsachse (X-X) der Steuerstange (12) achsensymmetrisch ist.

9. Stellglied (4) nach Anspruch 7, wobei der Ring achsensymmetrisch ist und zwischen dem Ring und der Steuerstange (12) eine spezifische Winkelausrichtung bereitgestellt ist, die durch eine Formkopplung zwischen einer Abflachung (29), die an der Steuerstange (12) angebracht wurde, erreicht wird, die mit einer flachen Anlagefläche (30), die am Ring erhalten wird, gekoppelt ist.

10. Stellglied (4) nach einem der Ansprüche 1 bis 9, wobei die Antenne (28) einen zylindrischen Träger (44) umfasst, auf den ein Metallabschnitt (48) aufgebracht ist.

11. Stellglied (4) nach Anspruch 10, wobei der Metallabschnitt eine Metallfolie (48) und/oder eine Metallbeschichtung umfasst, die durch Metallbeschichten, Kleben, Verzahnen, Hinterschneiden, Schweißen, CVD, PVD und dergleichen aufgebracht wird.

12. Stellglied (4) nach einem der Ansprüche 1 bis 11, wobei der Positionssensor (32) auf einer gedruckten Schaltung (36) parallel zur Steuerstange (12) angeordnet ist.

13. Stellglied (4) nach einem der Ansprüche 1 bis 12, wobei die Antenne (28) eine zylindrische Form um die Haupterstreckungsachse (X-X) aufweist, mit einem Radius (R), der größer ist als ein Abstand oder Spalt (G) vom Positionssensor (32).

14. Stellglied (4) nach einem der Ansprüche 1 bis 13, wobei der Positionssensor (32) so bemessen und positioniert ist, dass er die Position der Antenne (28) entlang des Betriebshubs (24) abdeckt und erkennt.

15. Stellglied (4) nach einem der Ansprüche 1 bis 14, wobei die Antenne (28) im Inneren des Gehäuses (8) zwischen dem Motormittel (16) und dem Positionssensor (32) angeordnet ist und wobei die Antenne (28) an einem inneren Ende (52) der Steuerstange (12) befestigt ist, die im Inneren des Gehäuses (8) enthalten ist, wobei das innere Ende (52) einem äußeren Ende (56) gegenüberliegt und mit diesem einstückig ist, welches mit der Betätigungsvorrichtung (20) verbunden ist.

## Revendications

1. Actionneur (4) comprenant :
- un corps (8) contenant au moins partiellement une tige de commande (12) reliée de manière opérationnelle à des moyens moteurs (16) et à un dispositif d'actionnement (20) d'un frein de stationnement, lesdits moyens moteurs (16) étant conçus pour déplacer la tige de commande (12) le long d'une course de fonctionnement (24) au moins d'une première position (A) à une seconde position (B),
- une antenne (28) directement et intégralement associée à la tige de commande (12), ladite antenne (28) étant agencée à l'intérieur du corps (8),
- un capteur de position (32) agencé sur un circuit imprimé (36), logé à l'intérieur du corps (8) et faisant face à la tige de commande (12) et à l'antenne (28), le capteur de position (32) étant configuré pour détecter la présence et la position de ladite antenne (28),
**caractérisé en ce que** ladite antenne (28) est agencée coaxialement à la tige de commande (12).

2. Actionneur (4) selon la revendication 1, dans lequel ladite tige de commande (12) a un axe d'extension principal (X-X) et est mobile le long d'une direction axiale parallèle audit axe d'extension principal (X-X).

3. Actionneur (4) selon la revendication 2, dans lequel ladite antenne (28) est axisymétrique par rapport audit axe d'extension principal (X-X).

4. Actionneur (4) selon l'une quelconque des revendications 1 à 3, dans lequel ladite antenne (28) est un anneau au moins partiellement en métal et coaxial avec ladite tige de commande (12).

5. Actionneur (4) selon l'une quelconque des revendications 1 à 4, dans lequel ladite antenne (28) est fixée à la tige de commande (12) par interférence (emmanchement) et/ou par collage.

6. Actionneur (4) selon l'une quelconque des revendications 1 à 6, dans lequel l'antenne (28) est clavetée et vissée sur une partie de la tige de commande (12) pourvue d'un filetage extérieur (60).

7. Actionneur (4) selon l'une quelconque des revendications 1 à 6, dans lequel ladite antenne (28) est un anneau comprenant plusieurs dents radiales (64) séparées mutuellement par des rainures (68), pourvues de bords d'extrémité (72) en forme d'arc de cercle afin d'être vissées sur le filetage extérieur (60) de la tige de commande (12).

8. Actionneur (4) selon la revendication 7, dans lequel ledit anneau est axisymétrique par rapport à l'axe d'extension principal (X-X) de la tige de commande (12).

9. Actionneur (4) selon la revendication 7, dans lequel ledit anneau est axisymétrique et une orientation angulaire spécifique est prévue entre l'anneau et la tige de commande (12), obtenue par couplage de forme entre un méplat (29), réalisé sur la tige de commande (12), qui s'accouple à une butée plate (30) obtenue sur l'anneau.

10. Actionneur (4) selon l'une quelconque des revendications 1 à 9, dans lequel ladite antenne (28) comprend un support cylindrique (44) sur lequel est appliquée une partie métallique (48).

11. Actionneur (4) selon la revendication 10, dans lequel ladite partie métallique comprend une feuille métallique (48) et/ou un revêtement métallique appliqué par revêtement métallique, collage, emboîtement, décolletage, soudage, CVD, PVD et autres.

12. Actionneur (4) selon l'une quelconque des revendications 1 à 11, dans lequel le capteur de position (32) est agencé sur un circuit imprimé (36) parallèle à ladite tige de commande (12).

13. Actionneur (4) selon l'une quelconque des revendications 1 à 12, dans lequel ladite antenne (28) a une forme cylindrique autour dudit axe d'extension principal (X-X), avec un rayon (R) supérieur à une distance ou un écart (G) par rapport au capteur de position (32).

14. Actionneur (4) selon l'une quelconque des revendications 1 à 13, dans lequel ledit capteur de position (32) est dimensionné et positionné de manière à couvrir et à détecter la position de l'antenne (28) le long de ladite course de fonctionnement (24).

15. Actionneur (4) selon l'une quelconque des revendications 1 à 14, dans lequel l'antenne (28) est agencée à l'intérieur du corps (8) entre les moyens moteurs (16) et le capteur de position (32) et dans lequel l'antenne (28) est fixée à une extrémité intérieure (52) de la tige de commande (12), contenue à l'intérieur du corps (8), ladite extrémité intérieure (52) étant opposée à une extrémité extérieure (56) qui s'interface avec ledit dispositif d'actionnement (20)et est solidaire de celui-ci.
